# EUROPÄISCHE PATENTSCHRIFT

(11) **EP 2 006 557 B1**
(45) Veröffentlichungstag und Bekanntmachung des Hinweises auf die Patenterteilung: **15.01.2020**
(21) Anmeldenummer: 08007933.8
(22) Anmeldetag: 24.04.2008
(51) Int. Cl.: F16C 32/04, F16C 39/02, D01H 4/12

(54) **Verfahren und Vorrichtung zum Starten einer elektrischen Maschine mit einem magnetisch gelagerten Rotor**
Method and device for starting an electric machine with a rotor, being magnetically supported
Procédé et dispositif de démarrage d'une machine électrique avoir un rotor avec un palier magnétique

(30) Priorität: 22.06.2007 DE 102007028935
(43) Veröffentlichungstag der Anmeldung: 24.12.2008
(73) Patentinhaber: Saurer Spinning Solutions GmbH & Co. KG, 52531 Übach-Palenberg (DE)
(72) Erfinder: Balboul, Nour-Eddine, 50969 Köln (DE)

(56) Entgegenhaltungen:
- EP-A1- 1 083 348
- DE-A1- 4 114 566
- DE-A1- 10 022 736
- DE-A1-102005 032 184
- JP-A- H11 166 533
- JP-A- 2006 022 914

## Beschreibung

Die Erfindung betrifft ein Verfahren zum Starten einer elektrischen Maschine mit einem magnetisch gelagerten Rotor, insbesondere zum Rotieren der Spinntasse einer Offenend-Spinnmaschine, und eine Vorrichtung mit der elektrischen Maschine und mit einem Steuergerät zum Starten der elektrischen Maschine. Das magnetische Lager weist Permanentmagnete, eine Aktorik zur Regelung der Lage in axialer Richtung und zwei axiale Begrenzungslager, durch die die axialen Endstellungen des Rotors bestimmt werden, auf.

Elektrische Maschinen mit magnetisch gelagertem Rotor werden zum Beispiel als Antrieb von Gas-Ultrazentrifugen, Turbomolekularpumpen, Werkzeugspindeln, Kompressoren, Blutpumpen und Schwungrädern verwendet. Eine magnetische Lagerung ist besonders bei hohen Drehzahlen von Vorteil, da sie gegenüber mechanischen Lagern wie Wälz- oder Gleitlagern eine deutlich geringere Verlustleistung hat. Ein besonderes Anwendungsgebiet ist der Antrieb der Spinntasse von Offenend-Spinnmaschinen. Hier sind Drehzahlen von über 100.000 Umdrehungen pro Minute erforderlich.

Die DE 100 22 736 A1 offenbart einen magnetisch gelagerten Antrieb für einen Spinnrotor einer Offenend-Spinnmaschine und erläutert die Regelung und den Aufbau einer magnetischen Lagerung. Die hier dargestellte magnetische Lagerung besteht aus jeweils zwei permanent magnetischen Ringen an jedem Wellenende. Eine magnetische Lagerung mit Permanentmagneten, man spricht auch von passiver Lagerung, ist in mindestens einer Achse instabil. Der zitierte Stand der Technik zeigt ein Radiallager, das in axialer Richtung instabil ist. Deshalb sind Aktoren erforderlich, mit deren Hilfe die Lage in axialer Richtung geregelt werden kann. Als Aktoren eigenen sich Spulen beziehungsweise Wicklungen, die das magnetische Feld der Permanentmagnete verstärken oder schwächen können. Um ein Aufeinandertreffen der Lagermagnete bei Ausfall des Aktors beziehungsweise im Ruhezustand bei abgeschalteter Maschine zu verhindern, weist eine solche Anordnung ein axiales Begrenzungslager, auch Fanglager genannt, auf. Durch das Begrenzungslager wird die axiale Endstellung des Rotors bestimmt. Im Ruhestand liegt der Rotor an dem axialen Begrenzungslager an. Bei der Inbetriebnahme der Maschine muss der Rotor durch geeignete Ansteuerung des Aktors von seinem Begrenzungslager abheben.

Neben den hohen Drehzahlen werden durch die große Gefahr der Verschmutzung durch Faserreste hohe Anforderungen an den Antrieb und die Lagerungen eines Spinnrotors gestellt. Bei solchen Verschmutzungen ist es möglich, dass der magnetisch gelagerte Rotor von der Regelung nicht mehr im Schwebezustand gehalten werden kann. Dann kann es zu Crashs und damit zu erheblichen Beschädigungen von Lagerung, Antrieb oder Spinnrotor kommen. Aber auch bei bereits vorhandenen mechanischen Beschädigungen oder bei Entmagnetisierung der Lagermagnete kann es während des Betriebes zu einem Absturz des schwebenden Rotors kommen.

Um einen Absturz des schwebenden Rotors zu vermeiden, sind aus dem Stand der Technik verschiedene Überwachungsmöglichkeiten bekannt, um während des Betriebes Verschmutzungen beziehungsweise Fehler zu erkennen und den magnetisch gelagerten Antrieb vor einem Crash abschalten zu können. Die WO 01/17096 A1 offenbart die Möglichkeit, Fehler der magnetischen Lagerung während des Betriebes durch die Auswertung eines Sensors zu erkennen. Die DE 10 2005 032 184 A1 sieht vor, dass während des Betriebes der Strom in den Aktorspulen zur Regelung der Lage in axialer Richtung ausgewertet wird und daraus auf Abweichungen der Lagerluftspalte von vorgegebenen Grenzwerten geschlossen wird. Die Aktorik zur Regelung der Lage in axialer Richtung wird dabei so angesteuert, dass eine Abhebung aus einer ersten axialen Endstellung bewirkt wird. Ferner wird die Aktorik nach Verbringen des Rotors in eine zweite Endstellung derart angesteuert, dass eine Abhebung aus der zweiten axialen Endstellung bewirkt wird.

Es ist möglich, dass Verschmutzungen oder Fehler der magnetischen Lagerung bereits vor Hochlauf der Antriebsmaschine vorhanden sind. Es wäre wünschenswert, solche Verschmutzungen oder Fehler möglichst früh zu erkennen und nicht erst, wenn die Maschine rotiert. Werden Fehler der Lagerung erst beim Hochlauf oder während des stationären Betriebes erkannt, ist es erforderlich, dass die Maschine sicher abgebremst wird. Das kostet Zeit und senkt die Betriebssicherheit.

Es ist daher die Aufgabe der vorliegenden Erfindung, Fehler oder Verschmutzungen einer elektrischen Maschine mit einem magnetisch gelagerten Rotor, insbesondere zum Rotieren der Spinntasse einer Offenend-Spinnmaschine, bereits beim Starten zu erkennen und die Betriebssicherheit der magnetischen Lagerung zu erhöhen.

Zur Lösung dieser Aufgabe wird ein Verfahren zum Starten einer elektrischen Maschine mit einem magnetisch gelagerten Rotor, insbesondere zum Rotieren der Spinntasse einer Offenend-Spinnmaschine vorgeschlagen, wobei das magnetische Lager Permanentmagnete, eine Aktorik zur Regelung der Lage in axialer Richtung und zwei axiale Begrenzungslager, durch die die axialen Endstellungen des Rotors bestimmt werden, aufweist, und die Aktorik zur Regelung der Lage in axialer Richtung so angesteuert wird, dass sie eine Abhebung aus der ersten axialen Endstellung bewirkt, und eine variable Systemgröße beim Abheben aus der ersten Endstellung mit einem Referenzwert verglichen wird, und der Rotor in die zweite Endstellung bewegt wird, und die Aktorik zur Regelung der Lage in axialer Richtung so angesteuert wird, dass sie eine Abhebung aus der zweiten axialen Endstellung bewirkt, und die variable Systemgröße beim Abheben aus der zweiten Endstellung mit einem Referenzwert verglichen wird, und bei einer vorher festgelegten Abweichung der variablen Systemgröße beim Abheben aus der ersten und/oder zweiten Endstellung von den Referenzwerten ein Fehlersignal generiert wird.

Zu Beginn des Startvorganges befindet sich der Rotor in einer der beiden axialen Endstellungen. Durch die Aktorik zur Regelung der Lage in axialer Richtung wird die Abhebung aus dieser ersten Endstellung bewirkt. Erfindungsgemäß wird nun nicht der Hochlauf der Maschine gestartet, sondern es wird der Rotor beispielsweise durch einen Impuls der Aktorik zur Regelung der Lage in axialer Richtung aus der Schwebeposition in die zweite Endstellung bewegt. Der Abhebeprozess aus der zweiten Endstellung wird entsprechend der ersten Abhebung überwacht. Die Abhebung aus beiden axialen Begrenzungslagern ist dabei wesentlicher Bestandteil des erfindungsgemäßen Verfahrens. Dabei kann man die Systemgrößen nicht nur mit vorbestimmten Referenzwerten vergleichen, sondern auch zusätzlich Unterschiede zwischen beiden Abhebeprozessen erkennen und so auf Unsymmetrien schließen. Eine Entmagnetisierung eines Magnetringes wäre nur bei Abhebung aus dem geschädigten Lager deutlich sichtbar. Die Abhebung aus dem intakten Lager würde kaum Änderungen zeigen.

Gemäß einer bevorzugten Ausführungsform des erfindungsgemäßen Verfahrens besteht die Aktorik zur Regelung der Lage in axialer Richtung aus mindestens einer elektrischen Wicklung.

Gemäß einer weiteren bevorzugten Ausführungsform des erfindungsgemäßen Verfahrens ist die variable Systemgröße der Strom, der in die elektrische Wicklung eingeprägt wird, oder eine diesem proportionale Größe.

Der Strom durch die elektrische Wicklung der Aktorik wird ohnehin für die Regelung der Lage in axialer Richtung benötigt. Er lässt sich leicht und genau messen. Für die Regelung der axialen Lage dient der Strom häufig als Stellsignal, so dass der Reglerausgang für die Ansteuerung der Endstufe dem Strom proportional ist. Auch diese Systemgröße kann für die Auswertung des Abhebeprozesses herangezogen werden.

Gemäß einer weiteren bevorzugten Ausführungsform des erfindungsgemäßen Verfahrens werden die Maximalwerte der variablen Systemgröße für die Ermittlung der Abweichung von den Referenzwerten verwendet.

Der Strom in der Aktorwicklung als variable Systemgröße ist der Kraft, die für die Abhebung aufgewendet werden muss proportional. Die Anziehungskraft zwischen beiden Magnetringen, die bei der Abhebung überwunden werden muss, ist umgekehrt proportional dem Quadrat des Abstandes der Magnetringe. Wenn also durch einen Fremdkörper, z.B. einen Fadenwickel, zwischen dem Begrenzungslager und dem Rotor der Abstand zwischen den Magnetringen in der Endstellung vergrößert wird, nimmt die Anziehungskraft ab und damit auch der benötigte Abhebestrom. Ist der Abstand zwischen den Magnetringen durch eine Beschädigung oder eine unzulässige Verschiebung reduziert, nimmt der Abhebestrom zu. Im Falle einer Entmagnetisierung nimmt die Anziehungskraft der Magnete ab. Wenn die Magnete entmagnetisiert sind, deren Anziehungskräfte bei der Abhebung überwunden werden müssen, nimmt der Abhebestrom ab. Wenn die Magnete entmagnetisiert sind, deren Anziehungskräfte die Abhebung aus der aktuellen Endstellung unterstützen, nimmt der Abhebestrom zu. Praktisch wird beim Abheben der Strom durch die Aktorspule so lange gesteigert bis der Rotor abhebt. Der auftretende Maximalwert kann dann mit den Referenzwerten verglichen werden. Dabei kann als Referenzwert ein unterer und ein oberer Grenzwert für den Maximalwert des Stromes angegeben werden.

Gemäß einer weiteren bevorzugten Ausführungsform des erfindungsgemäßen Verfahrens werden als eine zusätzliche variable Systemgröße die Messsignale des Lagesensors zur Bestimmung der axialen Lage verwendet.

So kann in ergänzender Weise, bspw. zusätzlich zum Strom, auch das Lagesensorsignal, das ebenfalls für die Regelung der Lage in axialer Richtung benötigt wird, für die Beurteilung der Abhebeprozesse herangezogen werden. Veränderungen durch Verschmutzungen oder Entmagnetisierungen können sowohl im Aktorstrom, als auch im Positionssignal detektiert werden. Bei einer Schwergängigkeit durch Verschmutzung oder einer Entmagnetisierung wird der Rotor durch die Nullstromregelung aus seiner axialen Mittenlage gedrängt, so dass bei den Abhebeprozessen aus beiden Endstellungen unterschiedliche Wege zurückgelegt werden. Es ist zu beachten, dass sich die Abstände zwischen den Endstellungen im Zehntelmillimeterbereich bewegen. Damit werden hohe Anforderungen an die Genauigkeit und Linearität des Lagesensors gestellt. Mit den heutigen Möglichkeiten einen Lagesensor über einen Mikrocontroller zu kalibrieren, sind die Genauigkeitsanforderungen jedoch erreichbar.

Gemäß einer weiteren bevorzugten Ausführungsform des erfindungsgemäßen Verfahrens werden als variable Systemgröße die Auflagekräfte auf die axialen Begrenzungslager verwendet, wobei die Auflagekräfte mittels eines Sensors gemessen werden. Der Sensor kann dabei in das Lagersystem integriert werden und als Kraft- oder Drucksensor ausgebildet sein.

Gemäß einer weiteren bevorzugten Ausführungsform des erfindungsgemäßen Verfahrens wird durch das Fehlersignal, welches bei Abweichungen der variablen Systemgröße von den Referenzwerten generiert wird, ein Anlaufen der Maschine verhindert. In diesem Fall wird von einer Beeinträchtigung ausgegangen, die ein zuverlässiges Arbeiten der magnetischen Lagerung während des Betriebes in Frage stellt. Es ist dann der Eingriff des Bedienpersonals zur Behebung des Fehlers erforderlich. Es wäre auch denkbar, zwei Ebenen von Referenzwerten festzulegen, wobei die erste Ebene nur eine warnende Störung generiert und gegebenenfalls registriert und erst die zweite Ebene zu einer Startverhinderung beziehungsweise Abschaltung führt. Im Falle der warnenden Störung kann dann der Fehler beim nächsten geplanten Eingriff in die Anlage behoben werden.

Zur Lösung der Aufgabe wird ferner eine Vorrichtung einer elektrischen Maschine mit einem magnetisch gelagerten Rotor, insbesondere zum Rotieren der Spinntasse einer Offenend-Spinnmaschine und mit einem Steuergerät zum Starten der elektrischen Maschine, vorgeschlagen, wobei das magnetische Lager Permanentmagnete, eine Aktorik zur Regelung der Lage in axialer Richtung und zwei axiale Begrenzungslager, durch die die axialen Endstellungen des Rotors bestimmt werden, aufweist, wobei das Steuergerät so eingerichtet ist, dass es zunächst mittels der Aktorik zur Regelung der Lage in axialer Richtung eine Abhebung aus der ersten axialen Endstellung bewirkt, und es dann eine Bewegung des Rotors in die zweite Endstellung veranlasst, und es schließlich mittels der Aktorik zur Regelung der Lage in axialer Richtung eine Abhebung aus der zweiten axialen Endstellung bewirkt, und das Steuergerät eine Auswerteeinrichtung beinhaltet, die eine variable Systemgröße beim Abheben aus der ersten und der zweiten Endstellung mit Referenzwerten vergleicht und bei einer vorher festgelegten Abweichung der variablen Systemgröße von den Referenzwerten ein Fehlersignal erzeugt.

Das Steuergerät kann beispielsweise aus einem Mikroprozessor oder einem Mikrocontroller bestehen, in dem die erläuterten Auswerteroutinen als Softwarecode umgesetzt sind. Das Steuergerät weist außerdem Schnittstellen zur Eingabe von Parametern auf, wie zum Beispiel die Referenzwerte, oder zur Aufnahme von Messwerten. Des Weiteren gibt es entsprechende Ausgabeschnittstellen zur Ansteuerung der Aktorik zur Regelung der Lage in axialer Richtung.

Gemäß einer weiteren Ausführungsform der erfindungsgemäßen Vorrichtung besteht die Aktorik aus mindestens einer elektrischen Wicklung.

Gemäß einer weiteren Ausführungsform der erfindungsgemäßen Vorrichtung ist die variable Systemgröße der Strom, der in die elektrische Wicklung eingeprägt wird, oder eine diesem proportionale Größe.

Gemäß einer weiteren Ausführungsform der erfindungsgemäßen Vorrichtung verwendet die Steuereinrichtung die Maximalwerte der variablen Systemgröße für die Ermittlung der Abweichung von den Referenzwerten.

Gemäß einer weiteren Ausführungsform der erfindungsgemäßen Vorrichtung verwendet die Steuereinheit als eine zusätzliche variable Systemgröße die Messsignale des Lagesensors zur Bestimmung der axialen Lage.

Gemäß einer weiteren Ausführungsform der erfindungsgemäßen Vorrichtung verwendet die Steuereinheit als variable Systemgröße die Auflagekräfte auf die axialen Begrenzungslager, wobei die Auflagekräfte mittels eines Sensors gemessen werden.

Gemäß einer weiteren Ausführungsform der erfindungsgemäßen Vorrichtung verhindert das Steuergerät mit Erzeugung des Fehlersignals ein Anlaufen der Maschine.

Die Erfindung wird nachfolgend anhand eines in den Zeichnungen dargestellten Ausführungsbeispiels näher erläutert.

Es zeigen:
- Fig. 1: eine schematische Darstellung einer elektrischen Maschine mit einem magnetisch gelagerten Rotor im Schwebezustand;
- Fig. 2: eine schematische Darstellung einer elektrischen Maschine mit einem magnetisch gelagerten Rotor in einer Endstellung;
- Fig. 3: den zeitlichen Verlauf des Stromes in der Wicklung zur Regelung der Lage und den zeitlichen Verlauf der Position des Rotors während der wechselseitigen Abhebung;
- Fig. 4: ein Blockdiagramm mit dem Ablauf und der Auswertung der Abhebeprozesse.

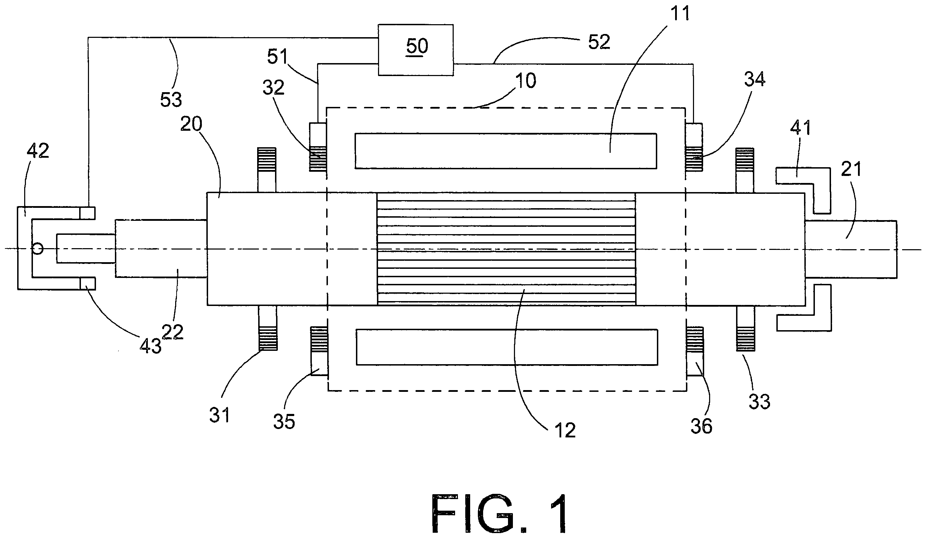

Fig. 1 zeigt eine schematische Darstellung einer elektrischen Maschine mit einem magnetisch gelagerten Rotor zum Rotieren der Spinntasse einer Offenend-Spinnmaschine. In dem dargestellten Ausführungsbeispiel ist die elektrische Maschine 10 ein elektronisch kommutierter Gleichstrommotor. Der Motor 10 weist im Stator ein Wicklungspaket 11 und im Rotor einen Permanentmagneten 12 auf. Der Permanentmagnet 12 ist mit dem Rotor 20 verbunden. Der Rotor 20 weist ein vorderes Ende 21 und ein hinteres Ende 22 auf. Das vordere Ende 21 ist mit einer hier nicht dargestellten Spinntasse mechanisch gekoppelt. Am vorderen Ende ist ein Begrenzungslager 41 und am hinteren Ende ein Begrenzungslager 42 angeordnet. Die Begrenzungslager bieten sowohl in axialer als auch radialer Richtung Schutz beim Ausfall oder Beschädigung der magnetischen Lagerung. Am hinteren Lager befindet sich zusätzlich ein Lagesensor 43 zur Bestimmung der Position des Rotors 20 in axialer Richtung. Für die magnetische Lagerung ist am vorderen und am hinteren Ende des Rotors jeweils ein axial magnetisierter Permanentmagnetring aufgebracht. Diese haben die Bezugszeichen 33 und 31. Mit dem Stator der Maschine sind zwei weitere axial magnetisierte Magnetringe 34 und 32 verbunden. Zur magnetischen Lagerung sind auch andere Magnetanordnungen und Magnetisierungsrichtungen möglich. Die dargestellte Anordnung ist in axialer Richtung instabil und benötigt deshalb eine Aktorik zur Regelung der Lage in axialer Richtung. Dazu sind um die mit dem Stator verbundenen Magnetringe 32 und 34 zwei Wicklungen 35 und 36 angeordnet. Werden die Wicklungen von einem Strom durchflossen, wird ein axial wirkendes Magnetfeld erzeugt, das das Magnetfeld der Permanentmagnete stärken oder schwächen kann. Die Regelung der Lage in axialer Richtung ist auch mit nur einer Spule möglich. Zur Ansteuerung der Aktorik zur Regelung der Lage in axialer Richtung ist ein Steuergerät 50 vorgesehen, das jeweils über eine zweiadrige Leitung 51 und 52 mit den Aktorspulen 35 und 36 verbunden ist. Durch diese Leitungen wird der Strom in die Aktorspulen eingeprägt. Ferner ist das Steuergerät über die Datenleitung 53 mit dem Lagesensor 43 verbunden, da wie oben beschrieben das Positionssignal zur Regelung der Lage in axialer Richtung benötigt wird.

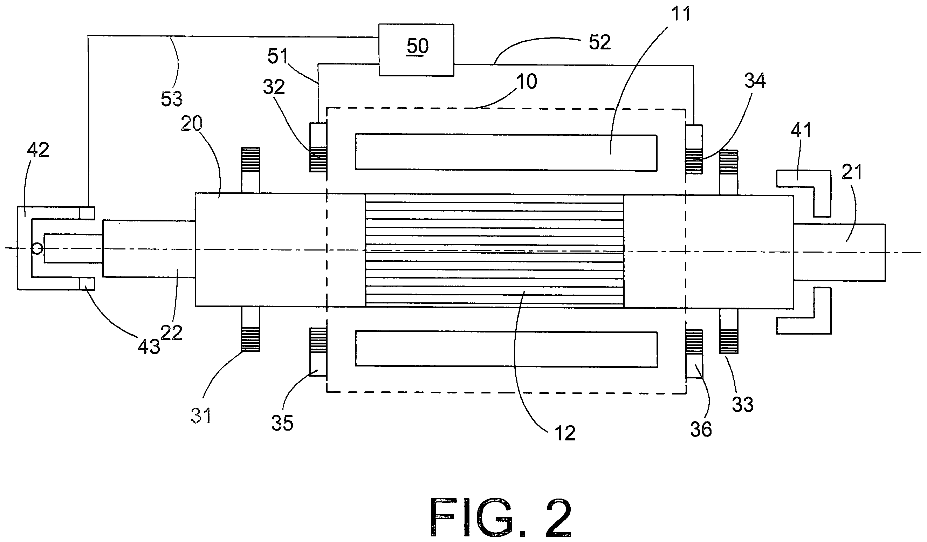

Die Begrenzungslager 41 und 42 bestimmen die axialen Endstellungen des Rotors. Fig. 1 zeigt den Rotor im Schwebezustand. In Fig. 2 befindet sich der Rotor in der hinteren Endstellung und liegt am hinteren Begrenzungslager an. Die Begrenzungslager sind so eingestellt, dass auch in den Endstellungen des Rotors ein ausreichender Abstand zwischen den Magnetringen vorliegt. Zum Abheben des Rotors aus dem hinteren axialen Begrenzungslager 42 müssen die Anziehungskräfte zwischen den Magnetringen 33 und 34 geschwächt und/oder die Anziehungskräfte zwischen Magnetringen 31 und 32 verstärkt werden.

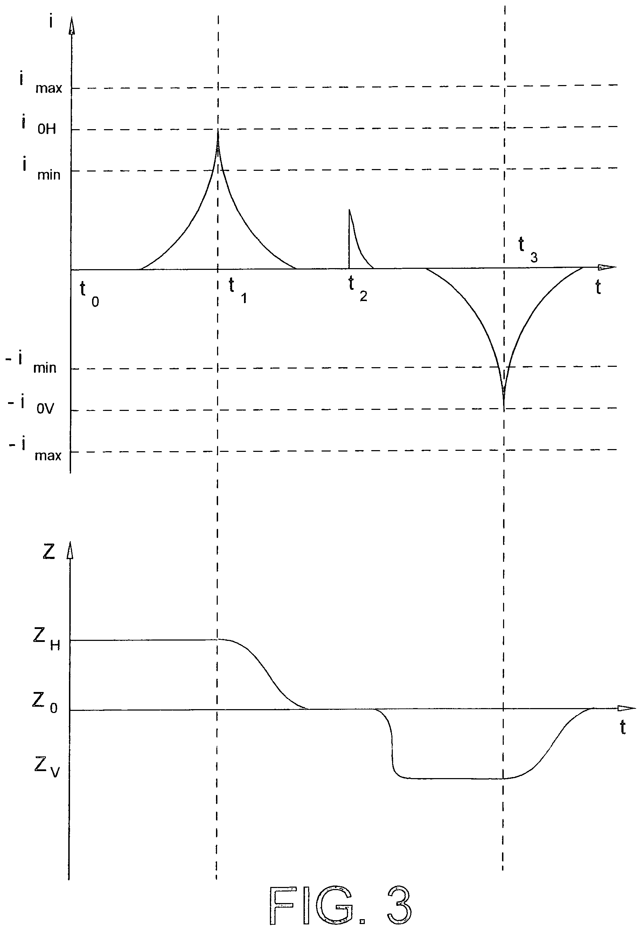

Fig. 3 zeigt im oberen Diagramm den zeitlichen Verlauf des Stromes i durch die Wicklung der Aktorik zur Regelung der Lage in axialer Richtung bei Abhebung des Rotors aus dem vorderen und dem hinteren Begrenzungslager. Im zweiten Diagramm von Fig. 3 ist analog der zeitliche Verlauf der Rotorposition z in axialer Richtung dargestellt. Zum Zeitpunkt t₀ befindet sich der Rotor in einem ersten, hier dem hinteren, Begrenzungslager an der Position z_{H}. Die Aktorwicklung ist zu diesem Zeitpunkt stromlos. Zur Abhebung des Rotors aus dem hinteren Begrenzungslager wird der Strom in den Aktorwicklungen langsam bis zu einem Maximalwert i_{0H} gesteigert. Der Maximalwert i_{0H} ist der Abhebestrom, der zur Abhebung des Rotors aus dem Begrenzungslager erforderlich ist. Mit Erreichen des Abhebestromes bewegt sich der Rotor in die Schwebeposition z₀. Der Aktorstrom kann dann wieder zurückgefahren werden. Erfindungsgemäß muss der Rotor in die zweite, hier in die vordere Endposition bewegt werden. Dies geschieht durch den Stromimpuls zum Zeitpunkt t₂. Durch den Stromimpuls verlässt der Rotor die Schwebeposition z₀ und wird in die vordere Endposition z_{V} überführt. Der Abhebeprozess wird dann analog zur ersten Abhebung erneut durchgeführt. Zum Zeitpunkt t₃ beginnt sich der Rotor erneut abzuheben und wird wieder in die Schwebeposition z₀ überführt. Zur Abhebung ist der Abhebestrom mit dem Betrag i_{0V} erforderlich. Die Ströme für die Abhebung aus dem hinteren und dem vorderen Begrenzungslager haben, wie der Abbildung zu entnehmen ist, umgekehrtes Vorzeichen. Vor Hochlauf der Maschine werden nun die aufgetretenen Maximalwerte der Strömebeträge i_{0H} und i_{0V} bei beiden Abhebeprozessen ausgewertet. Die Maximalwerte der Ströme müssen zwischen einer unteren Grenze iₘᵢₙ und einer oberen Grenze iₘₐₓ liegen.

Neben der Überprüfung der magnetischen Lagerung vor dem Hochlauf der Maschine kann das beschriebene Verfahren auch zur axialen Einstellung der Begrenzungslager in der Montage verwendet werden. Die Benutzung des Abhebestromes zur Einstellung der Begrenzungslager hat den Vorteil, dass keine aufwendige Positionsmesstechnik erforderlich ist. Wie bereits erwähnt, bewegt sich das axiale Lagerspiel des Magnetlagers im Zehntelmillimeterbereich. Zur Einstellung der axialen Begrenzungslager wird nicht der Strom der Aktorwicklung so lange erhöht, bis eine Abhebung stattfindet, sondern es werden Stromimpulse mit definierten Maximalwerten eingeprägt und die Position der Begrenzungslager so lange schrittweise verändert, bis eine Abhebung stattfindet. Um eine Abhebung des Rotors entsprechend der Anordnung in Fig. 2 zu erreichen, muss das Begrenzungslager 42 nach rechts verschoben werden. Sofern die Aktorwicklung dafür ausgelegt ist, kann alternativ zu den Stromimpulsen natürlich auch während des gesamten Einstellprozesses der definierte Maximalwert des Stromes eingeprägt werden.

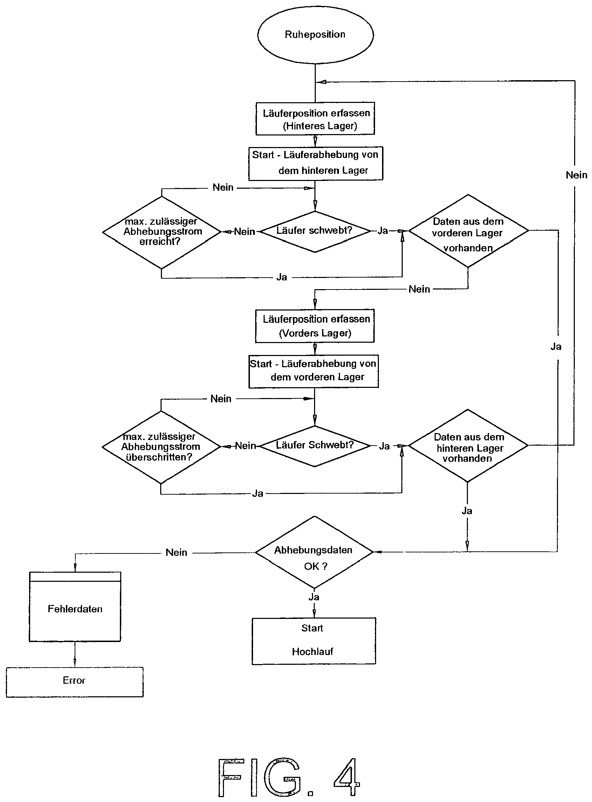

Fig. 4 zeigt ein Blockdiagramm mit einem möglichen Ablauf und der Auswertung der Abhebeprozesse. Das dargestellte Ausführungsbeispiel bezieht sich auf den Abhebeprozess einer elektrischen Maschine zum Rotieren einer Spinntasse einer Offenendspinnmaschine. Das vordere Ende des Rotors ist dabei wie bereits oben erläutert mit der Spinntasse gekoppelt. Das vordere Begrenzungslager ist nicht dafür ausgelegt, dass sich der Rotor dauerhaft in der vorderen Endposition befindet. Deshalb wird beim Herunterfahren des Antriebs und soweit möglich auch im Fehlerfall die Aktorik zur Regelung der Lage so angesteuert, dass sich der Rotor im Ruhezustand normalerweise in der hinteren Endstellung befindet. Es sei noch erwähnt, dass für das beschriebene Ausführungsbeispiel ein Lagesensor verwendet wird, der nur eine Änderung der Lage in axialer Richtung erfassen kann und nicht die absolute Position des Rotors. Der Begriff Läufer im dargestellten Blockdiagramm ist als Synonym für Rotor zu verstehen. Aufgrund des im Ausführungsbeispiel verwendeten Positionssensors, ist der Steuerung zum Einschaltzeitpunkt der Spinnmaschine die absolute Rotorposition nicht bekannt. Da der Läufer beziehungsweise der Rotor sich vor dem Hochlauf der Maschine, wie erwähnt, im Regelfall in der hinteren Endposition befindet, werden die Aktorwicklungen so bestromt, dass diese unter normalen Bedingungen eine Abhebung aus der hinteren Endposition bewirken würde. Die Steuereinheit weiß zu diesem Zeitpunkt noch nicht, ob sich der Rotor tatsächlich in der hinteren Endposition befindet. Die Steuerung fragt entsprechend der Zykluszeit durch Auswertung des Lagegebersignals immer wieder ab, ob der Läufer schwebt. Ist dies nicht der Fall, wird der Strom so lange erhöht, bis ein maximal zulässiger Strom erreicht ist. Dieser ist durch die maximale Belastbarkeit der elektrischen Komponenten bestimmt. Wenn der Läufer schwebt oder der maximal zulässige Strom erreicht ist, wird der Vorgang abgebrochen und abgefragt, ob Daten aus dem vorderen Lager vorhanden sind. Falls dies nicht der Fall ist, wird eine Abhebung aus dem vorderen Lager eingeleitet. Der Vorgang ist dann entsprechend wie für das hintere Lager. Wenn der Läufer schwebt, wird nochmals überprüft, ob Daten aus dem hinteren Lager vorhanden sind. Normalerweise wird dies der Fall sein. Nur wenn sich zum Beispiel der Rotor zu Beginn des Prozesses nicht im hinteren Begrenzungslager befunden hat, sondern im vorderen, wird erneut ein Abhebungsversuch aus dem hinteren Lager initiiert. Wenn Abhebungsdaten für beide Begrenzungslager vorhanden sind, wird überprüft, wie weit die ausgewählten Systemgrößen von den Referenzwerten abweichen. Das sind im Beispiel die Abhebeströme, es könnten aber auch die Rotorlageinformationen oder die Signale von Kraftsensoren sein. Weiterhin können natürlich auch mehrere Systemgrößen ausgewertet werden.

Wenn die Abhebungsdaten in Ordnung sind, wird der Hochlauf des Spinnrotors gestartet. Wenn die Abhebungsdaten nicht in Ordnung sind, werden die Fehlerdaten gespeichert und ein Fehlersignal generiert, welches ein Anlaufen der Maschine verhindert.

Der beschriebene Ablauf findet vor dem ersten Hochlauf des Spinnrotors nach dem Einschalten der Spinnmaschine statt und bewirkt eine Initialisierung der Steuerung, so dass dieser die Position des Rotors in axialer Richtung bekannt ist. Sofern die Spannungsversorgung nicht abgeschaltet wird, kann die Steuerung vor einem späteren Hochlauf direkt eine Abhebung aus der Endposition initiieren, in der sich der Läufer tatsächlich befindet.

## Patentansprüche

1. Verfahren zum Starten einer elektrischen Maschine (10) mit einem magnetisch gelagerten Rotor (20), insbesondere zum Rotieren der Spinntasse einer Offenend-Spinnmaschine, wobei das magnetische Lager Permanentmagnete (31, 32, 33, 34), eine Aktorik zur Regelung der Lage in axialer Richtung (35, 36) und zwei axiale Begrenzungslager (41, 42), durch die die axialen Endstellungen des Rotors bestimmt werden, aufweist, wobei die Aktorik zur Regelung der Lage in axialer Richtung (35, 36) so angesteuert wird, dass sie eine Abhebung aus der ersten axialen Endstellung bewirkt, eine variable Systemgröße beim Abheben aus der ersten Endstellung mit einem Referenzwert verglichen wird, der Rotor (20) in die zweite Endstellung bewegt wird, die Aktorik zur Regelung der Lage in axialer Richtung so angesteuert wird, dass sie eine Abhebung aus der zweiten axialen Endstellung bewirkt,
die variable Systemgröße beim Abheben aus der zweiten Endstellung mit einem Referenzwert verglichen wird und bei einer vorher festgelegten Abweichung der variablen Systemgröße beim Abheben aus der ersten und/oder zweiten Endstellung von den Referenzwerten ein Fehlersignal generiert wird.

2. Verfahren nach Anspruch 1, **dadurch gekennzeichnet, dass** die Aktorik aus mindestens einer elektrischen Wicklung (35,36) besteht.

3. Verfahren nach Anspruch 2, **dadurch gekennzeichnet, dass** die variable Systemgröße der Strom, der in die elektrische Wicklung (35, 36) eingeprägt wird, oder eine diesem proportionale Größe ist.

4. Verfahren nach Anspruch 3, **dadurch gekennzeichnet, dass** die Maximalwerte der variablen Systemgröße für die Ermittlung der Abweichung von den Referenzwerten verwendet werden.

5. Verfahren nach Anspruch 1 oder 2, **dadurch gekennzeichnet, dass** als eine zusätzliche variable Systemgröße die Messsignale des Lagesensors (43) zur Bestimmung der axialen Lage verwendet werden.

6. Verfahren nach Anspruch 1 oder 2, **dadurch gekennzeichnet, dass** als variable Systemgröße die Auflagekräfte auf die axialen Begrenzungslager verwendet werden, wobei die Auflagekräfte mittels eines Sensors gemessen werden.

7. Verfahren nach einem der Ansprüche 1 bis 6, **dadurch gekennzeichnet, dass** durch das Fehlersignal ein Anlaufen der Maschine verhindert wird.

8. Vorrichtung mit einer elektrischen Maschine (10) mit einem magnetisch gelagerten Rotor (20), insbesondere zum Rotieren der Spinntasse einer Offenend-Spinnmaschine und mit einem Steuergerät (50) zum Starten der elektrischen Maschine (10), wobei das magnetische Lager Permanentmagnete (31, 32, 33, 34), eine Aktorik zur Regelung der Lage in axialer Richtung (35, 36) und zwei axiale Begrenzungslager (41, 42), durch die die axialen Endstellungen des Rotors bestimmt werden, aufweist, wobei das Steuergerät so eingerichtet ist, dass es zunächst mittels der Aktorik zur Regelung der Lage in axialer Richtung (35, 36) eine Abhebung aus der ersten axialen Endstellung bewirkt,
dass es dann eine Bewegung des Rotors (20) in die zweite Endstellung veranlasst,
dass es schließlich mittels der Aktorik zur Regelung der Lage in axialer Richtung eine Abhebung aus der zweiten axialen Endstellung bewirkt, und
dass es eine Auswerteeinrichtung beinhaltet, die eine variable Systemgröße beim Abheben aus der ersten und der zweiten Endstellung mit Referenzwerten vergleicht und
bei einer vorher festgelegten Abweichung der variablen Systemgröße von den Referenzwerten ein Fehlersignal erzeugt.

9. Vorrichtung nach Anspruch 8, **dadurch gekennzeichnet, dass** die Aktorik aus mindestens einer elektrischen Wicklung (35, 36) besteht.

10. Vorrichtung nach Anspruch 9, **dadurch gekennzeichnet, dass** die variable Systemgröße der Strom, der in die elektrische Wicklung (35, 36) eingeprägt wird, oder eine diesem proportionale Größe ist.

11. Vorrichtung nach Anspruch 10, **dadurch gekennzeichnet, dass** die Steuereinrichtung (50) die Maximalwerte der variablen Systemgröße für die Ermittlung der Abweichung von den Referenzwerten verwendet.

12. Vorrichtung nach Anspruch 8 oder 9, **dadurch gekennzeichnet, dass** die Steuereinheit (50) als eine zusätzliche variable Systemgröße die Messsignale des Lagesensors (43) zur Bestimmung der axialen Lage verwendet.

13. Vorrichtung nach Anspruch 8 oder 9, **dadurch gekennzeichnet, dass** die Steuereinheit (50) als variable Systemgröße die Auflagekräfte auf die axialen Begrenzungslager verwendet, wobei die Auflagekräfte mittels eines Sensors gemessen werden.

14. Vorrichtung nach einem der Ansprüche 7 bis 11, **dadurch gekennzeichnet, dass** das Steuergerät (50) mit Erzeugung des Fehlersignals ein Anlaufen der Maschine verhindert.

## Claims

1. A method for starting an electric machine (10) having a magnetically mounted rotor (20), in particular for rotating the spinning cup of an open-end spinning machine, wherein the magnetic bearing has permanent magnets (31, 32, 33, 34), an actuator system for controlling the position in the axial direction (35, 36) and two axial limiting bearings (41, 42), by means of which the axial end positions of the rotor are determined, the actuator system for controlling the position in the axial direction (35, 36) being actuated in such a way that it effects a lifting off from the first axial end position,
a variable system parameter is compared with a reference value during the lift off from the first end position,
the rotor (20) is moved to the second end position,
the actuator system for controlling the position in the axial direction is actuated in such a way as to cause a lifting off from the second axial end position,
the variable system parameter is compared with a reference value when lifting off from the second end position, and an error signal is generated if the variable system parameter deviates in a predetermined manner from the reference values when lifting off from the first and/or second end position.

2. Method according to claim 1, **characterised in that** the actuator system consists of at least one electrical winding (35, 36).

3. Method according to claim 2, **characterised in that** the variable system parameter is the current which is injected into the electrical winding (35, 36) or a parameter proportional to that.

4. Method according to claim 3, **characterised in that** the maximum values of the variable system parameter are used for determining the deviation from the reference values.

5. Method according to claim 1 or 2, **characterised in that** the measurement signals of the position sensor (43) are used to determine the axial position as an additional variable system parameter.

6. Method according to claim 1 or 2, **characterised in that** the supporting forces on the axial limiting bearings are used as the variable system parameter, wherein the supporting forces are measured by means of a sensor.

7. Method according to one of claims 1 to 6, **characterised in that** the error signal prevents the machine from starting up.

8. A device with an electric machine (10) having a magnetically mounted rotor (20), in particular for rotating the spinning cup of an open-end spinning machine, and having a control unit (50) for starting the electric machine (10), wherein the magnetic bearing has permanent magnets (31, 32, 33, 34), an actuator system for controlling the position in the axial direction (35, 36) and two axial limiting bearings (41, 42), by means of which the axial end positions of the rotor are determined,
wherein the control unit is set up in such a way that it first effects a lifting off from the first axial end position by means of the actuator system for controlling the position in the axial direction (35, 36),
it then causes the rotor (20) to move to the second end position,
it finally effects a lifting off from the second axial end position by means of the actuator system for controlling the position in the axial direction, and
it includes an evaluation device which compares a variable system parameter with reference values when lifting off from the first and second end positions and it generates an error signal when the variable system parameter deviates from the reference values in a predetermined manner.

9. Device according to claim 8, **characterised in that** the actuator system consists of at least one electrical winding (35, 36).

10. Device according to claim 9, **characterised in that** the variable system parameter is the current which is injected into the electrical winding (35, 36) or a parameter proportional to that.

11. Device according to claim 10, **characterised in that** the control device (50) uses the maximum values of the variable system parameter for determining the deviation from the reference values.

12. Device according to claim 8 or 9, **characterised in that** the control unit (50) uses the measuring signals of the position sensor (43) as an additional variable system parameter for determining the axial position.

13. Device according to claim 8 or 9, **characterised in that** the control unit (50) uses the supporting forces on the axial limiting bearings as a variable system parameter, the supporting forces being measured by means of a sensor.

14. Device according to one of claims 7 to 11, **characterised in that** the control unit (50) prevents the machine from starting up by generating the error signal.

## Revendications

1. Procédé pour le démarrage d'une machine électrique (10) avec un rotor à palier magnétique (20), en particulier pour la rotation du pot de filage d'un métier à filer à fibres libérées, où le palier magnétique présente des aimants permanents (31, 32, 33, 34), un actionneur pour le réglage de la position en direction axiale (35, 36) et deux paliers de délimitation axiaux (41, 42) déterminant les positions finales axiales du rotor, et où l'actionneur pour le réglage de la position en direction axiale (35, 36) est commandé de manière à initier un retrait en dehors de la première position finale axiale,
une taille du système variable est comparée à une valeur de référence lors du retrait en dehors de la première position finale,
le rotor (20) se déplace vers la deuxième position finale, l'actionneur pour le réglage de la position en direction axiale est commandé de manière à initier un retrait en dehors de la deuxième position finale axiale,
la taille du système variable est comparée à une valeur de référence lors du retrait en dehors de la deuxième position finale, et un signal d'erreur est émis en cas de divergence préalablement définie de la taille du système variable par rapport aux valeurs de référence lors du retrait en dehors de la première et/ou de la deuxième position(s) finale(s).

2. Procédé selon la revendication 1, **caractérisé en ce que** l'actionneur se compose d'au moins un bobinage électrique (35, 36).

3. Procédé selon la revendication 2, **caractérisé en ce que** la taille du système variable est le courant appliqué dans le bobinage électrique (35, 36) ou une grandeur proportionnelle à celui-ci.

4. Procédé selon la revendication 3, **caractérisé en ce que** les valeurs maximales de la taille du système variable sont utilisées pour calculer la divergence par rapport aux valeurs de référence.

5. Procédé selon la revendication 1 ou 2, **caractérisé en ce que** les signaux de mesure du capteur de position (43) sont utilisés comme taille de système variable supplémentaire pour déterminer la position axiale.

6. Procédé selon la revendication 1 ou 2, **caractérisé en ce que** les forces d'appui exercées sur les paliers de délimitation axiaux, mesurées au moyen d'un capteur, sont utilisées comme taille du système variable.

7. Procédé selon l'une des revendications 1 à 6, **caractérisé en ce que** le signal d'erreur empêche tout démarrage de la machine.

8. Dispositif comprenant une machine électrique (10) avec un rotor à palier magnétique (20), en particulier pour la rotation du pot de filage d'un métier à filer à fibres libérées, et un appareil de commande (50) pour le démarrage de la machine électrique (10), où le palier magnétique présente des aimants permanents (31, 32, 33, 34), un actionneur pour le réglage de la position en direction axiale (35, 36) et deux paliers de délimitation axiaux (41, 42) déterminant les positions finales axiales du rotor,
où l'appareil de commande est disposé de manière à initier d'abord un retrait en dehors de la première position finale axiale au moyen de l'actionneur pour le réglage de la position en direction axiale (35, 36),
à initier ensuite un déplacement du rotor (20) vers la deuxième position finale,
à initier enfin un retrait en dehors de la deuxième position finale axiale au moyen de l'actionneur pour le réglage de la position en direction axiale, et
contenant un dispositif d'évaluation qui compare une taille du système variable à des valeurs de référence lors du retrait en dehors des première et deuxième positions finales, et émettant un signal d'erreur en cas de divergence préalablement définie de la taille du système variable par rapport aux valeurs de référence.

9. Dispositif selon la revendication 8, **caractérisé en ce que** l'actionneur se compose d'au moins un bobinage électrique (35, 36).

10. Dispositif selon la revendication 9, **caractérisé en ce que** la taille du système variable est le courant appliqué dans le bobinage électrique (35, 36) ou une grandeur proportionnelle à celui-ci.

11. Dispositif selon la revendication 10, **caractérisé en ce que** l'appareil de commande (50) utilise les valeurs maximales de la taille du système variable pour calculer la divergence par rapport aux valeurs de référence.

12. Dispositif selon la revendication 8 ou 9, **caractérisé en ce que** l'appareil de commande (50) utilise les signaux de mesure du capteur de position (43) comme taille du système variable supplémentaire pour déterminer la position axiale.

13. Dispositif selon la revendication 8 ou 9, **caractérisé en ce que** l'appareil de commande (50) utilise les forces d'appui exercées sur les paliers de délimitation axiaux, mesurées au moyen d'un capteur, comme taille du système variable.

14. Dispositif selon l'une des revendications 7 à 11, **caractérisé en ce que** l'appareil de commande (50) empêche tout démarrage de la machine en émettant le signal d'erreur.
